# EUROPEAN PATENT APPLICATION

(11) **EP 1 462 196 A1**
(43) Date of publication of application: **29.09.2004**
(21) Application number: 04007190.4
(22) Date of filing: 25.03.2004
(51) Int. Cl.: B23B 31/12

(54) **Self-locking drill chuck**

(30) Priority: 25.03.2003 CN 03216881 U
(71) Applicant: Shandong Weida Machinery Co., Ltd, Wendeng City, Shandong Province 264414 (CN)
(72) Inventor: Yang, Guimo, Shandong Province 264414 (CN); Tan, Xingda, Shandong Province 264414 (CN); Gao, Ping, Shandong Province 264414 (CN)
(74) Representative: Beyer, Andreas, Dr.

(57) **Abstract**

A self-locking drill chuck, comprising a chuck body (1), clamping jaws (4), a nut (3), a nut jacket (5), a front sleeve (6), and a rear sleeve (2), a rotational sleeve (8) is provided between the front sleeve (6) and the nut jacket (5), the rotational sleeve (8) is mounted onto the nut jacket (5) with a turning space provided in the nut jacket (5), on the rotational sleeve (8) there are two protruding stoppers (8-1), the nut jacket (5) has pawls (5-1), a gear wheel (11) is fixed to the outer circumference of the rear part of the chuck body (1), the gear wheel (11) has teeth (11-1). When tightening or loosening of the drill chuck, through the rotational sleeve (8), the front sleeve (6) carries the nut jacket (5) to turn accordingly, so that the stopper (8-1) of the rotational sleeve (8) will guide the pawls (5-1) of the nut jacket (5) to move inwards or outwards. The pawls (5-1) correspond with the teeth (11-1) of the gear wheel (11). When the pawls (5-1) are pushed inwards, it will fit into the teeth (11) thus will be self-locked. The drill chuck according to the present invention has the function of self-locking, the drill tools fastened by the drill chuck may not be loosed due to the vibration and the impact, the present invention has the advantages of a simple structure, high working stability, convenience of operation, and high reliability of self-locking capability. It can be used for the clamping of various drill tools.

## Description

### TECHNICAL FIELD

The present invention relates to a device for clamping drill tools, in particular, a self-locking drill chuck.

### BACKGROUND

A conventional manual drill chuck typically comprises a chuck body, a plurality of clamping jaws, a nut, a nut jacket, a bearing, a front sleeve, and a rear sleeve. The clamping jaws, usually three, are respectively inserted into three angled bores uniformly distributed around the chuck body of the drill chuck. The nut is fitted in a nut groove of the chuck body. The threads of the nut and the threads of the clamping jaws together form a thread driving mechanism to drive the clamping jaws back and forth. The nut jacket is fixedly connected to the nut. The front sleeve is connected to the nut or the nut jacket via one or more keys. The rear sleeve is fixedly connected to the chuck body. A threaded hole or a taper hole is provided at the rear portion of the chuck body.

During assembling and using the drill chuck to clamp a drill tool, a threaded rod of a driving shaft of a driving device is connected with the threaded hole defined in the rear portion of the chuck body. When the driving shaft rotates, it drives the chuck body to rotate with the three clamping jaws and the drill tool fastened therein rotating synchronously. When assembling the drill tool, the front sleeve is turned with respect to the rear sleeve by hand, thereby the nut connected with the front sleeve via the key(s) turns with respect to the clamping jaws inside the chuck body, the clamping jaws move forward along the angled bores of the chuck body via the thread driving mechanism formed between the nut and the clamping jaws, so the drill tool is fastened by the clamping jaws.

However, as to the conventional drill chuck, the drill tool may be loosed from the drill chuck as a result of vibration and impact. Which significantly reduces the working efficiency and the security reliability of the drill chuck. Although there are some drill chuck devices with a self-locking mechanism, they can not be produced in a large amount due to their complex structure.

### DESCRIPTION

An object of the present invention is to provide a self locking drill chuck having a simple structure, self-locking function, high working reliability, high security and convenience of operation, which overcomes the drawbacks of the foregoing conventional drill chucks.

To achieve the above-mentioned objects of the present invention, the present invention provides a self-locking drill chuck, which comprises a chuck body, clamping jaws, a nut, a nut jacket, a front sleeve, and a rear sleeve, wherein a rotational sleeve is provided between the front sleeve and the nut, the rotational sleeve has at least one protruding stopper, at least one pawl is provided on the nut jacket, a gear wheel is fixed to the outer circumference of the rear part of the chuck body, the gear wheel has teeth. Through the rotational sleeve, the front sleeve carries the nut jacket to turn accordingly, so that the stopper of the rotational sleeve will guide the pawls of the nut jacket to move inwards or outwards. The pawls correspond with the teeth of the gear wheel. When the pawls are pushed inwards, it will fit into the teeth thus will be self-locked.

With the above mentioned structure, the present invention provides a drill chuck having a function of self-locking automatically, a simple structure, high working stability, convenience of operation, and high reliability of self-locking capability. It can be used for the clamping of various drill tools.

### BRIEF ILLUSTRATION OF DRAWINGS

The present invention will now be explained with reference to the preferred embodiment taken in conjunction with the attached drawings, in which:
- FIG. 1: is a schematic view of the structure of a drill chuck according to an embodiment of the present invention;
- FIG. 2: is a cross sectional view of drill chuck according to a embodiment of the present invention, which is taken along the line A-A of FIG. 1;

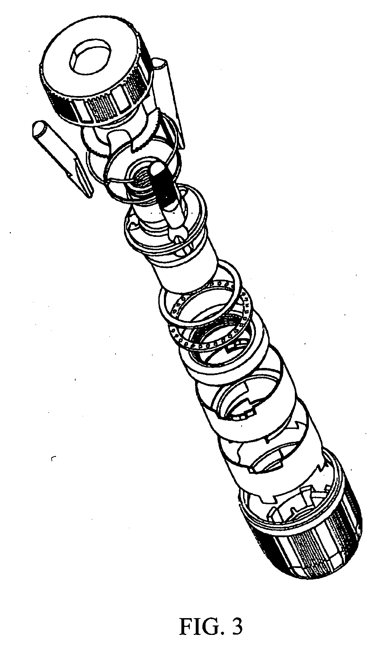

- FIG. 3: is an exploded perspective view of the drill chuck according to the present invention;
- FIG. 4a - 4e: show the details of the nut jacket 5 of FIG. 1;
- FIG. 5a - 5d: show the details of the rotational sleeve 8 of FIG. 1; and
- FIG. 6a - 6c: show the details of the gear wheel 11 of FIG. 1.

The reference numbers of the parts in the drawings are as follows: chuck body 1, rear sleeve 2, nut 3, clamping jaw 4, nut jacket 5, pawl 5-1, front sleeve 6, retaining spring 7, rotational sleeve 8, stopper 8-1, bearing 9, bearing gasket 10, gear wheel 11, teeth 11-1.

### PREFERRED EMBODIMENTS

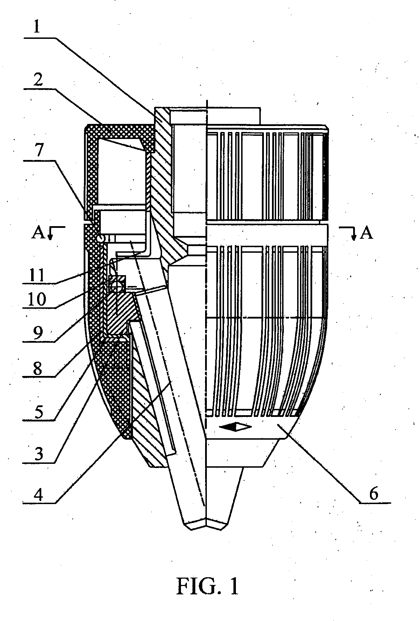

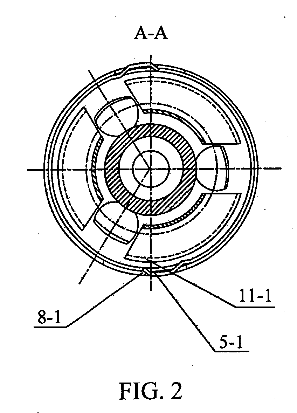

As shown in FIGs. 1 and 2, a self-locking drill chuck according to the present invention comprises a chuck body 1, a rear sleeve 2, a nut 3, a plurality of (for example, three) clamping jaws 4, a nut jacket 5, a front sleeve 6, a retaining spring 7, a rotational sleeve 8, a bearing 9, and a bearing gasket 10. Three clamping jaws 4 are respectively and operatively installed in three angled bores that are respectively defined in and uniformly distributed around the body 1. The nut 3 is fitted in a nut groove of the chuck body 1. The threads of the nut 3 and the threads of the clamping jaws 4 together form a thread driving mechanism. The nut jacket 5 is fixedly connected to the nut 3. The rear sleeve 2 is fixedly connected to the chuck body 1. A threaded hole or a taper hole is provided at the rear end portion of the chuck body 1. As the above- mentioned structures as well as the interconnects of each elements are well known to the person skilled in the art, so the detailed explains are omitted.

It also can be seen from FIGs. 1 and 2, a rotational sleeve 8 is provided between the front sleeve 6 and the nut jacket 5, the rotational sleeve 8 is mounted onto the nut jacket 5 with a turning space provided in the nut jacket 5. Through rotational sleeve 8, the plastic front sleeve 6 carries the nut jacket 5 to turn, making either the movement of loosening or tightening, depending on the direction turned. According to the present invention, on the rotational sleeve 8 there are two protruding stoppers 8-1. The nut jacket 5 has pawls 5-1. A gear wheel 11 is fixed to the outer circumference of the rear part of the chuck body 1, the gear wheel 11 may be fixed to the check body 1 by pressed interfere. The gear wheel 11 has teeth 11-1. When tightening or loosening of the drill chuck, through rotational sleeve 8, the front sleeve 6 carries the nut jacket 5 to turn accordingly, so that the stopper 8-1 of the rotational sleeve 8 will guide the pawls 5-1 of the nut jacket 5 to move inwards or outwards, the pawls 5-1 is engaged with the teeth 11-1 of the gear wheel 11. When the pawls 5-1 are pushed inwards, it will fit into the teeth 11-1 thus will be self-locked.

As shown in FIG. 2, the nut jacket 5 has two identical pawls 5-1 on either sides, each pawl 5-1 has a V-shaped bent and is slightly convex. Through rotational sleeve 8, the front sleeve 6 carries the nut jacket 5 to turn accordingly. But the rotational sleeve 8 can also turned relative to the nut jacket 5. When the rotational sleeve 8 turns relative to the nut jacket 5, through the stoppers 8-1 of the rotational sleeve 8, the pawls 5-1 will be guided to move inwards or outwards. When the pawls 5-1 are pushed inwards, it will fit into the teeth 11-1 thus will be self-locked.

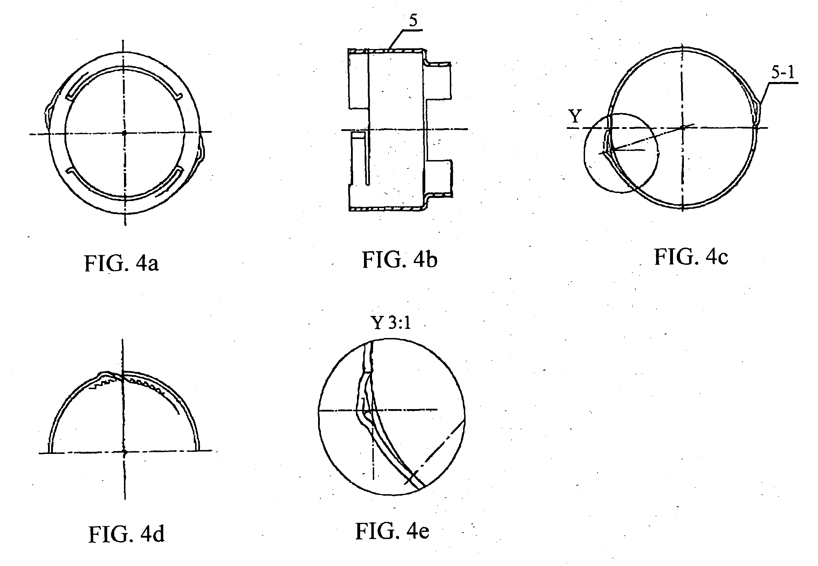

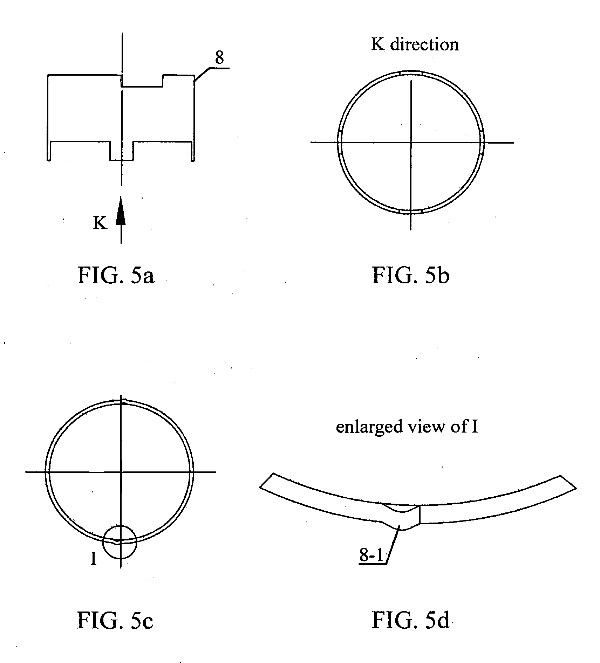

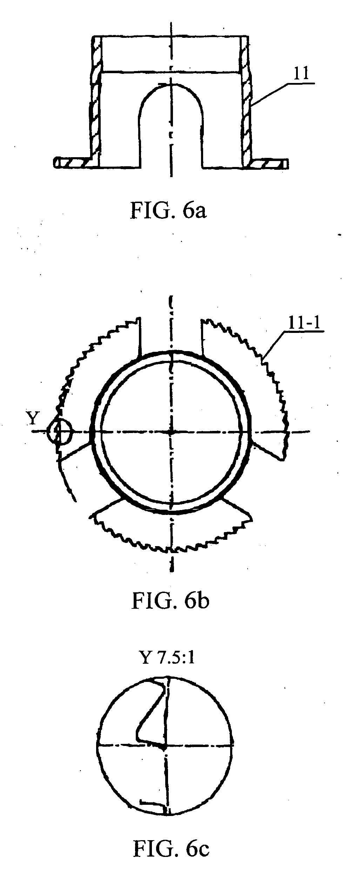

FIGs. 4a-4c show the detail shape of the nut jacket 5, FIG. 4e is an enlarged view of the pawl 5-1 of the nut jacket 5, FIG. 4d shows the state of the pawl 5-1 being engaged with the teeth 11-1 of the gear wheel 11. FIGs. 5a-5c show the detail shape of the rotational sleeve 8, FIG. 5d is an enlarged view showing the stopper 8-1 of the rotational sleeve 8. FIGs. 6a and 6b show the detail shape of the gear wheel 11, FIG. 6c is an enlarged view of the teeth 11-1 of the gear wheel 11.

The drill chuck according to the present invention has the function of self-locking, the drill tools fastened by the drill chuck may not be loosed due to the vibration and the impact, the present invention has the advantages of a simple structure, high working stability, convenience of operation, and high reliability of self-locking capability. It can be used for the clamping of various drill tools.

While the present invention has been described and illustrated herein with reference to the preferred embodiments thereof, it will be apparent to those skilled in the art that various modifications and variations can be made therein without departing from the spirit and scope of the invention. Thus, it is intended that the present invention covers the modifications and variations of this invention that come within the scope of the appended claims and their equivalents.

## Claims

1. A self-locking drill chuck comprising
- a chuck body having a rear part and an outer circumference;
- a plurality of clamping jaws;
- a nut;
- a nut jacket having at least one pawl;
- a gear wheel having teeth correspondent to the at least one pawl, said gear wheel being fixed to the outer circumference;
- a front sleeve;
- a rear sleeve; and
- a rotational sleeve on which at least one protruding stopper is arranged; the rotational sleeve being provided between the nut jacket and the front sleeve that drives the nut jacket to rotate, so that the stopper guides the at least one pawl to move inwards or outwards, when being pushed inwards, the at least one pawl gears with the teeth and becomes self-locked.

2. The self-locking drill chuck as recited in Claim 1 wherein the nut jacket has two identical pawls on either side.

3. The self-locking drill chuck as recited in Claim 1 or 2 wherein said at least one pawl has a V-shaped bent and is slightly convex.
